# EUROPÄISCHE PATENTANMELDUNG

(11) **EP 1 386 825 A2**
(43) Veröffentlichungstag der Anmeldung: **04.02.2004**
(21) Anmeldenummer: 03016950.2
(22) Anmeldetag: 25.07.2003
(51) Int. Cl.: B62D 5/30

(54) **Lenkanlage für Mobilfahrzeuge**

(30) Priorität: 01.08.2002 DE 10235107
(71) Anmelder: ZF Lenksysteme GmbH, 73527 Schwäbisch Gmünd (DE)
(72) Erfinder: Kogel, Walter, D-73453 Abtsgmünd (DE); Budaker, Martin, D-73540 Heubach (DE); Heintschel, Manfred, D-73525 Schwäbisch Gmünd (DE); Gazyakan, Uenal, D-88045 Friedrichshafen (DE); Beck, Jürgen Michael, D-74613 Öhringen (DE)

(57) **Zusammenfassung**

Die Erfindung betrifft eine mittels Fremdkraft betätigbare Lenkanlage für Mobilfahrzeuge, insbesondere Fahrzeuge für landwirtschaftlichen Einsatz, mit einem ersten, hydrostatischen Lenkkreis mit einem doppelt wirkenden Druckmittelzylinder (1), der mit einem Achsgehäuse (2) und an seinen beiden Enden über Spurstangen (3) mit lenkbaren Radnaben (7) verbunden ist und einem zweiten Lenkkreis mit einem elektrischen Lenksteller (4). Der elektrisch betätigbare Lenksteller (4) ist parallel vor, unter, über oder hinten an dem Druckmittelzylinder (1) montiert und mit einem Koppelelement (11) ausgestattet zur Übertragung der Stellbewegungen des elektrisch betätigten Lenkstellers (4) auf eine Kolbenstange (12) des hydrostatischen Lenkkreises.

## Beschreibung

Die Erfindung betrifft eine Lenkanlage für Mobilfahrzeuge, insbesondere Fahrzeuge für landwirtschaftlichen Einsatz, mit den Merkmalen des Oberbegriffs des Anspruchs 1.

Lenkanlagen, insbesondere Zweikreis-Lenkanlagen, sollen vor allem Notlenkeigenschaften für Fahrzeuge gewährleisten für den Fall, daß z. B. ein Kreis der Lenkanlage ausfällt. Ein Vorteil der Fahrzeuge für landwirtschaftlichen Einsatz mit Zweikreis-Lenkanlagen ist es, dass diese bis 62 km/h zugelassen sind, wohingegen Fahrzeuge für landwirtschaftlichen Einsatz mit Einkreis-Lenkanlagen nur bis 50 km/h zugelassen sind.

Bekannt ist aus der DE 199 10 001 eine Zweikreis-Lenkanlage für Mobilfahrzeuge, insbesondere Fahrzeuge für landwirtschaftlichen Einsatz, mit einem ersten, hydrostatischen Lenkkreis mit einem doppelt wirkenden Druckmittelzylinder, der mit einem Achsbrückengehäuse und an seinen beiden Enden über Spurstangen mit lenkbaren Radnaben verbunden ist und einem zweiten Lenkkreis mit einem elektrischen Lenksteller. Der elektrische Lenksteller ist über die Spurstangen und eine Kolbenstange des doppelt wirkenden Druckmittelzylinders mit den lenkbaren Radnaben verbunden. Der doppelt wirkende Druckmittelzylinder ist bei diesem Stand der Technik vor der Achse und der elektrische Lenksteller hinter der Achse vorgesehen. Nachteilig bei diesem Stand der Technik ist, dass die großen Lenkwinkel bei Fahrzeugen für landwirtschaftlichen Einsatz und die damit notwendigen großen Verschiebewege der Stellglieder zu hohem Bauraumbedarf führen und mit der beschriebenen Installation des elektrischen Lenkstellers nur schwer umsetzbar ist. Der elektrische Lenksteller und seine Zuleitungen sind durch ihre exponierten Positionen nur unzureichend vor Beschädigung durch Hindernisse geschützt. Der elektrische Lenksteller muß so konstruiert sein, dass er neben den auftretenden Lenkkräften auch noch sein Eigengewicht trägt, wobei die zur Einleitung der räumlich wirkenden großen Lenkkräfte notwendigen Gelenkelemente zwischen elektrischem Lenksteller und Radnabe oder Achse sehr groß ausfallen. Es sind bei diesem Stand der Technik zudem jeweils zwei Lenkaggregate mit entsprechenden Anlenkpunkten an Radnabe und Achse sowie erhöhter Anzahl der Bauelemente und der damit verbundene erhöhte Montageaufwand aufzubringen.

Aufgabe der Erfindung ist es, eine Lenkanlage für Mobilfahrzeuge, insbesondere Fahrzeuge für landwirtschaftlichen Einsatz, zu schaffen, mit der die Nachteile des Standes der Technik beseitigt werden.

Die Lösung erfolgt mit einer fremdkraftbetätigten Lenkanlage für Mobilfahrzeuge, insbesondere Fahrzeuge für landwirtschaftlichen Einsatz, mit den Merkmalen des Anspruchs 1.

Gemäß der Erfindung ist eine Lenkanlage für Mobilfahrzeuge, insbesondere Fahrzeuge für landwirtschaftlichen Einsatz, mit einem ersten, beispielsweise einem hydrostatischen, Lenkkreis mit einem doppelt wirkenden Druckmittelzylinder, der mit einem Achsgehäuse und an seinen beiden Enden über Spurstangen mit lenkbaren Radnaben verbunden ist und einem zweiten Lenkkreis, beispielsweise mit einem elektrischen Lenksteller, ausgestattet. Der hydrostatische Lenkkreis kann auch als zweiter und der elektrische Lenkkreis als erster Lenkkreis vorgesehen sein. Der elektrisch betätigte Lenksteller ist parallel vor, unter, über oder hinter an dem Druckmittelzylinder montiert und mit einem Koppelelement ausgestattet zur Übertragung der Stellbewegungen des elektrisch betätigten Lenkstellers auf eine Kolbenstange des hydrostatischen Lenkkreises. Vorteilhaft ergibt sich für die erfindungsgemäße Lenkanlage durch die Nutzung der Lenkkinematik des hydrostatischen Lenkkreises eine reduzierte Anzahl der insgesamt erforderlichen Bauelemente, wie z. B. Gelenke und das Eigengewicht des elektrisch betätigten Lenkstellers wird erfindungsgemäß vom Achsbrückengehäuse aufgenommen, wohingegen es beim Stand der Technik durch den Stellmechanismus selbst aufgenommen wird. Der elektrisch betätigte Lenksteller ist durch seine Einbauposition gut vor Beschädigungen durch Hindernisse geschützt.

Gemäß einer bevorzugten Ausgestaltung der Erfindung ist der Druckmittelzylinder und der elektrisch betätigte Lenksteller in einem gemeinsamen Gehäuse untergebracht, das vorzugsweise variabel montierbar ist an verschiedenen Achsen, so dass sich erfindungsgemäß der Montageaufwand reduziert.

Gemäß einer weiteren bevorzugten Ausgestaltung der Erfindung ist an dem gemeinsamen Gehäuse die Verkabelung und/oder Verrohrung zentral angebracht.

Gemäß einer weiteren bevorzugten Ausgestaltung der Erfindung sind Steuerung und Leistungselektronik für den elektrisch betätigten Lenksteller in dem gemeinsamen Gehäuse untergebracht.

Die Erfindung wird im folgenden anhand eines bevorzugten Ausführungsbeispiels dargestellt.
Es zeigen:

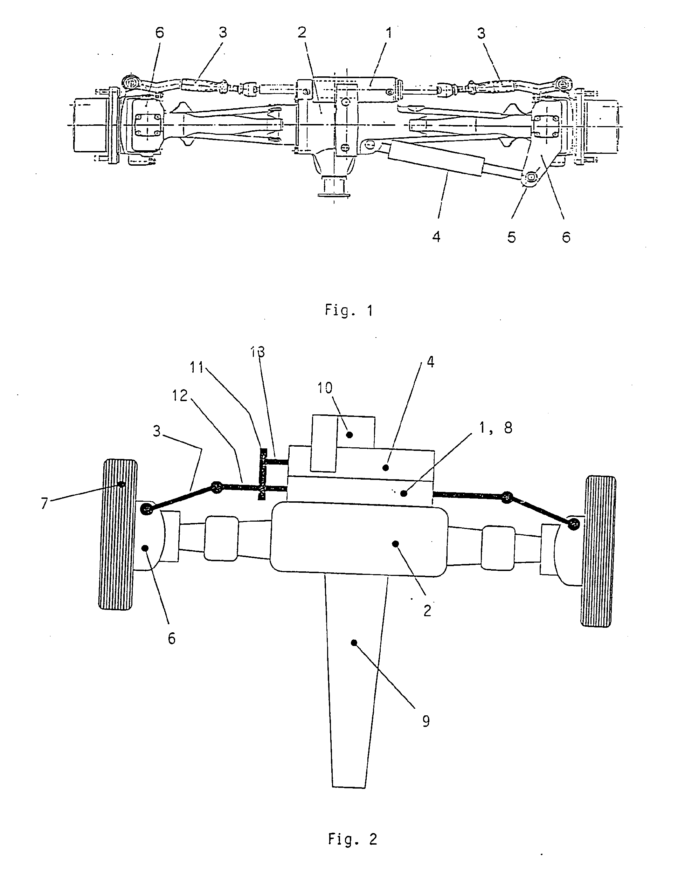

- Fig. 1: eine Lenkanlage an einer angetriebenen Achse des Standes der Technik und
- Fig. 2: eine schematisch dargestellte Lenkanlage an einer angetriebenen Achse gemäß der Erfindung.

Fig. 1:
   Eine Lenkanlage des Standes der Technik eines Fahrzeugs (nicht dargestellt) für landwirtschaftlichen Einsatz weist einen ersten, hydrostatischen Lenkkreis mit einem doppelt wirkenden Druckmittelzylinder 1 auf, der vor einem Achsbrückengehäuse 2 montiert ist und an seinen beiden Enden über Spurstangen 3 und je ein Gelenkgehäuse 6 mit lenkbaren Radnaben 7 verbunden ist. Ein zweiter Lenkkreis mit einem elektrischen Lenksteller 4 ist dem Druckmittelzylinder 1 gegenüberliegend hinter dem Achsbrückengehäuse 2 montiert und über ein Kugelgelenk 5 an ein Gelenkgehäuse 6 einer lenkbaren Radnabe 7 gebunden.
Fig. 2:
   Eine fremdkraftbetätigbare Lenkanlage eines Fahrzeugs (nicht dargestellt) für landwirtschaftlichen Einsatz weist einen ersten, hydrostatischen Lenkkreis mit einem doppelt wirkenden Druckmittelzylinder 1 in einem Gehäuse 8 auf, der vor einem Achsgehäuse 2 mit Schubrohr 9 montiert ist.
   Ein zweiter Lenkkreis mit einem von einem elektrischen Motor 10 betätigten elektrischen Lenksteller 4 ist ebenfalls in dem Gehäuse 8 an dem Druckmittelzylinder 1 vor dem Achsgehäuse 2 montiert und über eine Kolbenstange 13 und ein Koppelelement 11 mit der Kolbenstange 12 des Druckmittelzylinders 1 verbunden. Die Kolbenstange 12 ist an ihren beiden Enden über Spurstangen 3 und je ein Gelenkgehäuse 6 mit den lenkbaren Rädern 7 verbunden.
   Die Verkabelung und/oder Verrohrung (nicht dargestellt) ist zentral mit der Steuerung und Leistungselektronik (nicht dargestellt) für den elektrisch betätigten Lenksteller 4 in dem gemeinsamen Gehäuse 8 untergebracht.

### Bezugszeichen

- 1: Druckmittelzylinder
- 2: Achsgehäuse
- 3: Spurstange
- 4: elektrischer Lenksteller
- 5: Kugelgelenk
- 6: Gelenkgehäuse
- 7: Rad (nabe)
- 8: Gehäuse
- 9: Schubrohr
- 10: elektrischer Motor
- 11: Koppelelement
- 12: Kolbenstange
- 13: Kolbenstange

## Patentansprüche

1. Lenkanlage für Mobilfahrzeuge, insbesondere Fahrzeuge für landwirtschaftlichen Einsatz, mit einem ersten, beispielsweise einem hydrostatischen, Lenkkreis mit einem doppelt wirkenden Druckmittelzylinder (1), der mit einem Achsgehäuse (2) und an seinen beiden Enden über Spurstangen (3) mit lenkbaren Radnaben (7) verbunden ist und einem zweiten Lenkkreis, beispielsweise mit einem elektrischen Lenksteller (4), **dadurch gekennzeichnet, dass** der elektrisch betätigbare Lenksteller (4) parallel vor, unter, über oder hinten an dem Druckmittelzylinder (1) montiert ist und mit einem Koppelelement (11) ausgestattet ist zur Übertragung der Stellbewegungen des elektrisch betätigten Lenkstellers (4) auf eine Kolbenstange (12) des hydrostatischen Lenkkreises.

2. Lenkanlage gemäß Anspruch 1, **dadurch gekennzeichnet, dass** der Druckmittelzylinder (1) und der elektrisch betätigte Lenksteller (4) in einem gemeinsamen Gehäuse (8) untergebracht sind.

3. Lenkanlage gemäß Anspruch 3, **dadurch gekennzeichnet, dass** das gemeinsame Gehäuse (8) variabel montierbar an verschiedenen Achsen (2) ist.

4. Lenkanlage gemäß Anspruch 3, **dadurch gekennzeichnet , dass** an dem gemeinsamen Gehäuse (8) die Verkabelung und/oder Verrohrung zentral angebracht ist.

5. Lenkanlage gemäß Anspruch 3, **dadurch gekennzeichnet, dass** Steuerung und Leistungselektronik für den elektrisch betätigten Lenksteller (4) in dem gemeinsamen Gehäuse (8) untergebracht sind.
